# EUROPEAN PATENT SPECIFICATION

(11) **EP 3 486 100 B1**
(45) Date of publication and mention of the grant of the patent: **12.05.2021**
(21) Application number: 17827232.4
(22) Date of filing: 12.05.2017
(51) Int. Cl.: B60H 1/24, B60H 1/00, G01N 15/06

(54) **DUST MEASURING SYSTEM FOR VEHICLES AND AIR-CONDITIONING APPARATUS FOR VEHICLES**
STAUBMESSSYSTEM FÜR FAHRZEUGE UND KLIMAANLAGE FÜR FAHRZEUGE
SYSTÈME DE MESURE DE POUSSIÈRE DESTINÉ À DES VÉHICULES ET APPAREIL DE CLIMATISATION DESTINÉ À DES VÉHICULES

(30) Priority: 12.07.2016 JP 2016137882
(43) Date of publication of application: 22.05.2019
(73) Proprietor: Denso Corporation, Kariya-shi, Aichi 448-8661 (JP)
(72) Inventor: ISHIYAMA, Naotaka, Kariya-city, Aichi-pref., 448-8661 (JP); KUSABA, Takamitsu, Kariya-city, Aichi-pref., 448-8661 (JP); MAEDA, Manabu, Kariya-city, Aichi-pref., 448-8661 (JP); KAWAI, Takayoshi, Kariya-city, Aichi-pref., 448-8661 (JP)
(74) Representative: TBK
(86) International application number: PCT/JP2017/017998
(87) International publication number: WO 2018/012098

(56) References cited:
- WO-A1-2016/170257
- CN-U- 203 287 312
- JP-A- 2003 312 227
- JP-A- 2008 213 711
- JP-A- 2008 261 511
- JP-U- H0 737 731
- JP-U- S59 169 216
- JP-U- S59 169 216

## Description

### CROSS REFERENCE TO RELATED APPLICATIONS

This application is based on and claims the benefits of priority of Japanese Patent Application No. 2016-137882 filed on July 12, 2016.

### TECHNICAL FIELD

The present disclosure relates to a dust measuring system for a vehicle and an air conditioner for a vehicle.

### BACKGROUND ART

In recent years, especially in China, there is a need to measure and display a concentration of PM2.5 (i.e., micro particles) in a cabin of a vehicle. The concentration of PM2.5 will be referred to as "dust concentration" hereafter. Generally, optical sensors are used to detect the dust concentration. However, optical sensors need a certain volume of air flowing to a sensor portion to detect the dust concentration accurately. For example, the Chinese utility model CN 203287312 U teaches that a dust measuring system for detecting the dust concentration is arranged in a cabin and that a duct is disposed to take in dust into the dust measuring system. Specifically, an optical sensor is located in an air passage through which air flows from the cabin to the dust measuring system. An air suction device draws in the air into the air passage. As such, the optical sensor detects the dust concentration of the air in the cabin.

Furthermore, document JP H07 37731 U refers to a vehicle contamination detection device comprising an odor sensor capable of detecting different odors at a downstream side of the branch portion of an aspirator having a branch portion communicating with a main flow path of a vehicle air conditioner.

Still further, document JP S59 169216 U shows an air purifying apparatus for an automobile comprising a light emitting element and a light receiving element provided so as to sandwich the air passing through an aspirator duct.

### SUMMARY OF INVENTION

However, conventional structures, e.g., the above-described structure of CN 203287312 U, need an air suction device to draw in air into an air passage that houses the optical sensor. As such, generating power is necessary to operate the air suction device, and a space is necessary in the cabin to dispose the air suction device.

It is as object of the present disclosure to provide a dust measuring system for a vehicle and an air conditioner for a vehicle that improve mountability in the vehicle and that save power.

In an aspect of the present disclosure, the dust measuring system for a vehicle includes a dust measuring sensor that measures a dust concentration of air in a cabin of the vehicle and an air conditioner for the vehicle that controls an air conditioning for the cabin. The air conditioner has and aspirator and an air inflow path. The aspirator draws in the air from the cabin by using a pressure drop caused due to a flow of air taken in from an air-conditioning unit. The air drawn in from the cabin by the aspirator flows through the air inflow path. The dust measuring sensor is mounted to the air inflow path to measure the dust concentration from a flow of the inside air taken in from the cabin. The air inflow path has an inside-air sensor that is positioned in an inlet portion adjacent to the cabin and that detects information on the air drawn in from the cabin. The dust measuring sensor is integrally formed with the inside-air sensor

According to the above-described structure, the aspirator of the air conditioner for a vehicle supplies the flow of the air to the dust measuring sensor by using an existing structure that causes the flow of the air. As such, the device only for causing the flow of the air is not necessarily mounted. Therefore, installation space in the vehicle for installing devices can be reduced, and mountability of the dust measuring system for a vehicle to the vehicle can be improved. In addition, the dust measuring system for a vehicle itself does not need power to supply the flow of the air to the dust measuring sensor. As such, the dust measuring system for a vehicle can save power.

According to the air conditioner for a vehicle having the above-described structure, the dust measuring sensor measures the dust concentration with the aspirator causing the flow of the air and with the inside-air sensor, i.e., the existing structure detecting the information on the air. As such, since power to supply the flow of the air to the dust measuring sensor is not necessary, power consumed by the air conditioner for a vehicle as a whole can be saved.

According to the present disclosure, a dust measuring system for a vehicle and an air conditioner for a vehicle that improve mountability in the vehicle and that save power can be provided.

### BRIEF DESCRIPTION OF DRAWINGS

FIG. 1 is a diagram showing a dust measuring system for a vehicle and an air conditioner for a vehicle in a first example, which is not part of the invention.
FIG. 2 is a diagram showing a dust measuring system for a vehicle and an air conditioner for a vehicle in a preferred embodiment.
FIG. 3 is a diagram showing a dust measuring system for a vehicle and an air conditioner for a vehicle in a second example, which is not part of the invention.

### EMBODIMENTS FOR CARRYING OUT INVENTION

Hereinafter, examples and embodiments will be described with reference to the attached drawings. In order to facilitate the ease of understanding, the same reference numerals are attached to the same constituent elements in each drawing where possible, and redundant explanations are omitted.

### First Example (not part of the invention)

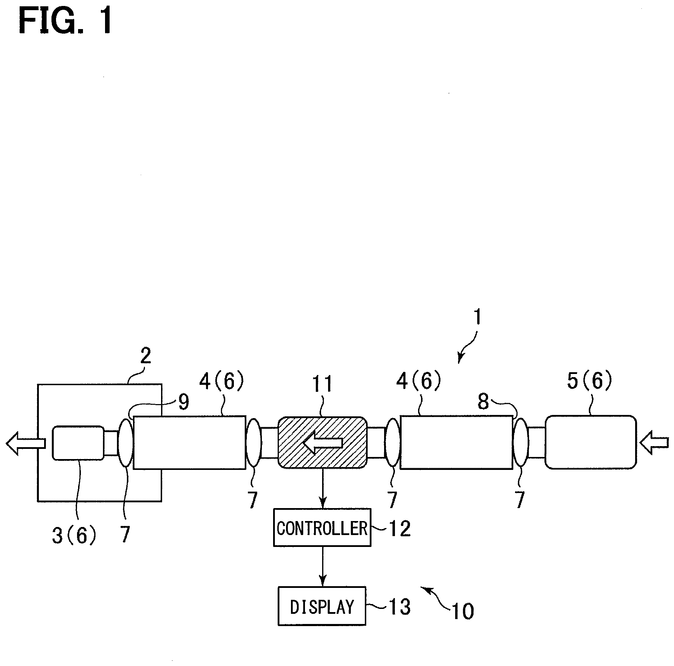

A first example will be described hereafter with reference to FIG. 1. First, a dust measuring system 10 for a vehicle and an air conditioner 1 for a vehicle having the dust measuring system 10 in the first example will be described.

As shown in FIG. 1, the air conditioner 1 for a vehicle controls an air conditioning for a cabin of the vehicle by cooling and heating air, i.e., inside air, in the cabin. The air conditioner 1 for a vehicle includes an air-conditioning unit 2 (i.e., HVAC unit: Heating Ventilation and Air conditioning Unit), an aspirator 3, an aspirator hose 4 (i.e., an air duct), and an inside-air sensor 5.

The air-conditioning unit 2 is a core of the air conditioner 1 for a vehicle and performs heating the inside air, cooling the inside air and ventilating the inside air. The air-conditioning unit 2 may be integrally formed of a blower unit, a heater core, evaporator (not shown). As an example, the heater core heats air discharged from the blower unit, and the evaporator cools air discharged from the blower unit. As a result, the air-conditioning unit 2 optimizes a temperature in the cabin.

The aspirator 3 is attached to the air-conditioning unit 2. The aspirator 3 causes a negative pressure by using a flow of the air taken in from the air-conditioning unit 2. As an example, the aspirator 3 causes a negative pressure by using a part of the air drawn in by the blower unit. The negative pressure results in a decrease in a pressure inside the aspirator 3. As such, the aspirator 3 draws in the air (i.e., the inside air) from the cabin.

The aspirator hose 4 is the air duct through which the inside air drawn by the aspirator 3 flows. The aspirator hose 4 includes one end 9 connected to the aspirator 3 and an other end 8 connected to an opening through which the aspirator hose 4 and the cabin are in communication with each other. That is, the other end 8 is an inlet from which the air flows into the aspirator hose 4, and the one end 9 is an outlet from which the air flows out of the aspirator hose 4. It should be understood that the aspirator hose 4 is not limited to be formed into a hose as long as serving as an air duct through which the inside air taken in by the aspirator 3 flows.

The inside-air sensor 5 is positioned in an inlet portion between the other end 8 of the aspirator hose 4 and the cabin. The inside-air sensor 5 detects information on the air (i.e., the inside air) taken in from the cabin into the aspirator hose 4. As an example, the inside-air sensor 5 may detect a temperature and/or a humidity of the inside air. The inlet portion in which the inside-air sensor 5 is positioned is, in other words, an inlet of the air inflow path 6 opening to the cabin.

The aspirator 3, the aspirator hose 4, and the inside-air sensor 5 are connected to each other via a connector 7. The air inflow path 6 is integrally formed of the aspirator 3, the aspirator hose 4 and the inside-air sensor 5. The air taken in from the cabin flows through the air inflow path 6. In other words, this structure may be explained as the air inflow path 6 through which the air taken in from the cabin flows has the aspirator 3 and the inside-air sensor 5 therein.

The air conditioner 1 for a vehicle, when being operated, i.e., when the blower unit ventilating the air, allows the aspirator 3 to draw in the inside air from the cabin into the air inflow path 6. As such, the inside-air sensor 5 detects information on, e.g., a temperature of, the inside air flowing through the air inflow path 6 with high accuracy. Therefore, the air conditioner 1 for a vehicle can control the air conditioning for the cabin with high accuracy based on the information on the inside air.

The dust measuring system 10 in the first example is mounted to the above-described air conditioner 1 for a vehicle. The dust measuring system 10 is configured to measure a dust concentration of the inside air in the cabin using a flow of the air passing through the air inflow path 6. The dust measuring system 10 for a vehicle includes a dust measuring sensor 11, a controller 12, and a display 13.

The dust measuring sensor 11 measures the dust concentration of the inside air in the cabin of the vehicle. The dust measuring sensor 11 may be a known optical sensor. The dust measuring sensor 11 includes a sensing portion and detects the dust concentration of the inside air while the inside air passes through the sensing portion at a specified speed or higher. The dust measuring sensor 11 is mounted to the air inflow path 6 of the air conditioner 1 for a vehicle to measure the dust concentration from a flow of the inside air taken in from the cabin. In the dust measuring system 10 for a vehicle in the first example, the dust measuring sensor 11 is mounted to the aspirator hose 4 that forms the air inflow path 6.

The aspirator 3 preferably causes a flow of the inside air flowing at a specified speed. The flow of the inside air flowing at the specified speed enables the dust measuring sensor 11 to detect the dust concentration. As an example, a pore diameter of the aspirator 3, an inner diameter of the aspirator hose 4, or a diameter of an inlet of the dust measuring sensor 11 from which the inside air flows into the dust measuring sensor 11 may be adjusted to obtain the specified speed of the inside air.

The dust measuring sensor 11 is connected to the controller 12 electrically. The information on the dust concentration is input from the dust measuring sensor 11 to the controller 12. The controller 12 uses the information on the dust concentration obtained by the dust measuring sensor 11. As an example, the controller 12 may (i) accumulate the information on the dust concentration, (ii) analyze the information on the dust concentration, (iii) control various devices of the vehicle based on the information on the dust concentration, e.g., open and close a power window, and/or (iv) output the information on the dust concentration, information obtained by analyzing the dust concentration, and/or information on a control of the various devices to the display 13. As an example, the controller 12 may be mounted as a part of an ECU (electronic control unit) of the vehicle.

The display 13 displays the information on the dust concentration output from the controller 12. As an example, the display 13 shows an occupant (i) the dust concentration measured by the dust measuring sensor 11, (ii) an increase or a decrease of the dust concentration and/or (iii) operational information on the various devices based on the dust concentration. Alternatively, when the dust concentration in the cabin rises, the display 13 shows the occupant a message to open the window and ventilate the air or a message to close the window not to take in air outside the vehicle.

The dust measuring system 10 for a vehicle is configured to measure the dust concentration of the inside air while the air conditioner 1 for a vehicle is operating and the blower unit of the air-conditioning unit 2 ventilating the air, i.e., while the aspirator 3 drawing in the air from the cabin into the air inflow path 6.

Generally, the air conditioner 1 for a vehicle may not perform the air conditioning with high efficiency until an engine of the vehicle is warmed up sufficiently, e.g., when the occupant turns on the air conditioner 1 for a vehicle immediately after the engine starts. As such, the air conditioner 1 for a vehicle may be controlled not to discharge air into the cabin while the engine is warmed up. On the other hand, in the present example, the blower unit of the air-conditioning unit 2 can be operated while the engine is warmed up so that the flow of the air is caused in the air inflow path 6 and that the dust measuring sensor 11 detects the dust concentration. When operating the blower unit of the air-conditioning unit 2 while the engine is warmed up, the air conditioner 1 for a vehicle discharges air having relatively low temperature. As such, the blower unit may be operated with a low rotational speed so that the occupant does not feel the cool air preferably. As an example, the blower unit may be operated in "super Lo mode" which may be a generic term of a mode performed by the air conditioner 1 for a vehicle.

Next, effects made by the dust measuring system 10 for a vehicle in the first example will be described. The dust measuring system 10 for a vehicle in the first example includes the dust measuring sensor 11 that measures the dust concentration of the inside air in the cabin. The vehicle mounting the dust measuring system 10 for a vehicle mounts the air conditioner 1 for a vehicle that controls the air conditioning for the cabin. The air conditioner 1 for a vehicle has the aspirator 3 and the air inflow path 6. The aspirator 3 draws in the inside air from the cabin using a pressure drop that is caused due to a flow of the air taken in from the air-conditioning unit 2. The air inflow path 6 allows the inside air drawn in from the cabin into the aspirator 3 to flow therethrough. The dust measuring sensor 11 is mounted to the air inflow path 6 to measure the dust concentration from a flow of the inside air taken in from the cabin.

As described above, the dust measuring sensor 11 needs a flow of air passing through the sensing portion at the specified speed or higher to detect the dust concentration of the air. As such, in conventional techniques, a device, e.g., an air suction device, for causing the flow of the air is required. In contrast, in the present example, the aspirator 3 of the air conditioner 1 for a vehicle supplies the flow of the air to the dust measuring sensor 11 by using an existing structure that causes the flow of the air. As such, the device only for causing the flow of the air is not necessarily mounted. Therefore, installation space in the vehicle for installing devices can be reduced, and mountability of the dust measuring system 10 for a vehicle to the vehicle can be improved. In addition, the dust measuring system 10 for a vehicle itself does not need power to supply the flow of the air to the dust measuring sensor 11. As such, the dust measuring system 10 for a vehicle can save power.

In the first example, the dust measuring system 10 for a vehicle has the air inflow path 6, the aspirator hose 4, and the dust measuring sensor 11. The air inflow path 6 includes the one end 9 connected to the aspirator 3 and the other end 8 connected to the opening through which the air inflow path 6 and the cabin are in communication with each other. The aspirator hose 4 allows the inside air taken in from the cabin to flow therethrough. The dust measuring sensor 11 is mounted to the aspirator hose 4.

As such, the inside air taken in form the cabin passes through the dust measuring sensor 11 certainly. Therefore, the dust measuring sensor 11 can detects the dust concentration with high accuracy. Moreover, the dust measuring system 10 for a vehicle can be installed to the air conditioner 1 for a vehicle only by modifying the aspirator hose 4 without changing other components of the air conditioner 1 for a vehicle. That is, most of existing components of the air conditioner 1 for a vehicle can be used as they are. As such, facility of manufacturing is improved, and cost in the manufacturing can be reduced.

In the dust measuring system 10 for a vehicle in the first example, the aspirator 3 causes the flow of the air flowing at the specified speed and enables the dust measuring sensor 11 to measure the dust concentration. Therefore, the dust measuring sensor 11 can measure the dust concentration at any time while the air conditioner 1 for a vehicle is operated. As such, the dust measuring sensor 11 measures the dust concentration more stably.

In the first example, the dust measuring system 10 for a vehicle includes the controller 12. The controller 12 uses the information on the dust concentration measured by the dust measuring sensor 11. That is, the dust measuring system 10 can utilize the information on the dust concentration effectively. In addition, the dust measuring system 10 for a vehicle includes the display 13. The display 13 displays the information on the dust concentration output from the controller 12. As such, the dust measuring system 10 can show an occupant appropriate information based on the information on the measured dust concentration.

In the dust measuring system 10 for a vehicle in the first example, the blower unit of the air-conditioning unit 2 is operated while the engine of the vehicle is warmed up to cause the flow of the air and enables the dust measuring sensor 11 to measure the dust concentration. As such, the dust measuring sensor 11 can measure the dust concentration while the engine is warmed up. Therefore, time during which the dust measuring sensor 11 detects the dust concentration can be extended.

In the air conditioner 1 for a vehicle in the first example, the dust measuring sensor 11 measures the dust concentration with the aspirator 3 causing the flow of the air and with the inside-air sensor 5, i.e., the existing structure detecting the information on the air. As such, since power to supply the flow of the air to the dust measuring sensor 11 is not necessary, power consumed by the air conditioner 1 for a vehicle as a whole can be saved.

### Preferred Embodiment

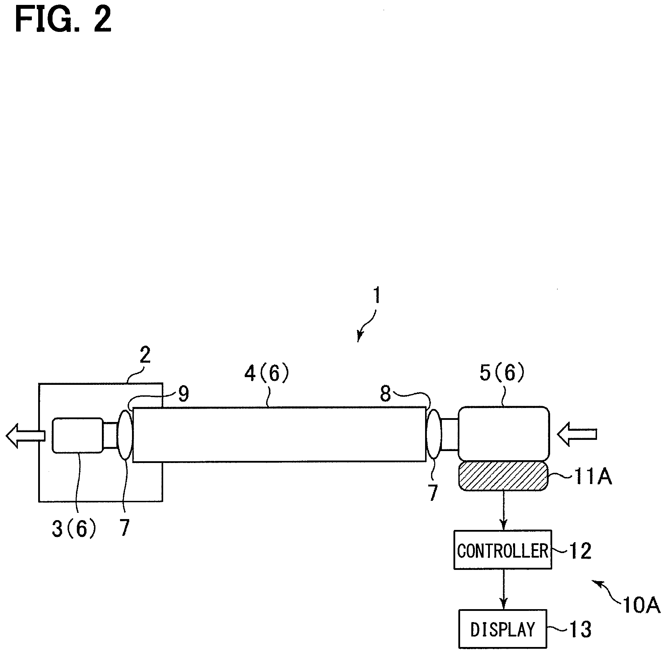

A preferred embodiment will be described hereafter with reference to FIG. 2. As shown in FIG. 2, a dust measuring system 10A for a vehicle in the preferred embodiment is different from the dust measuring system 10 for a vehicle in the first example in a point that a dust measuring sensor 11A is integrally formed with the inside-air sensor 5.

In the present embodiment, the dust measuring system 10A for a vehicle can be installed to the air conditioner 1 for a vehicle only by modifying the inside-air sensor 5 without changing other components of the air conditioner 1 for a vehicle. That is, most of existing components of the air conditioner 1 for a vehicle can be used as they are. As such, facility of manufacturing is improved, and cost in the manufacturing can be reduced.

Further, similar to the first example, the dust measuring sensor 11A is mounted to the air inflow path 6 of the air conditioner 1 for a vehicle. As such, the same effects made by the dust measuring system 10 for a vehicle and the air conditioner 1 for a vehicle in the first embodiment can be made in the present embodiment as well.

### Second Example (not part of the invention)

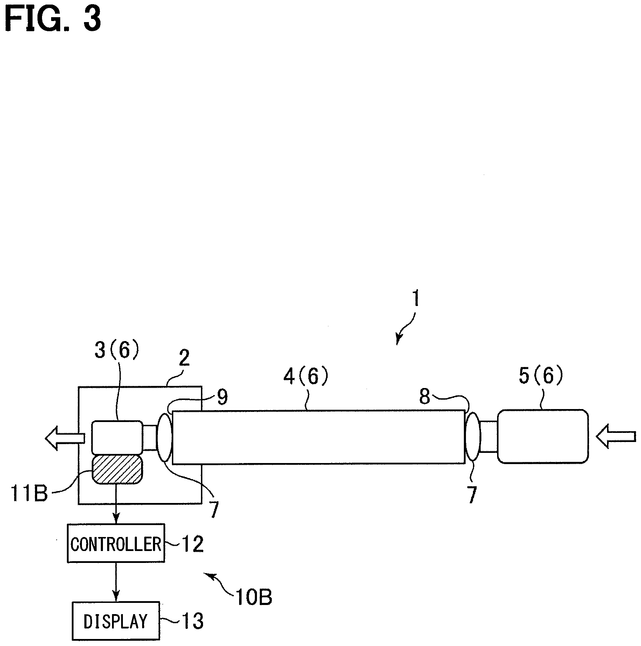

A second example will be described hereafter with reference to FIG. 3. As shown in FIG. 3, a dust measuring system 10B for a vehicle in the preferred embodiment is different from the dust measuring system 10 for a vehicle in the first example in a point that a dust measuring sensor 11B is integrally formed with the aspirator 3.

In the present example, the dust measuring system 10B for a vehicle can be installed to the air conditioner 1 for a vehicle only by modifying the aspirator 3 without changing other components of the air conditioner 1 for a vehicle. That is, most of existing components of the air conditioner 1 for a vehicle can be used as they are. As such, facility of manufacturing is improved, and cost in the manufacturing can be reduced.

Further, similar to the first example, the dust measuring sensor 11B is mounted to the air inflow path 6 of the air conditioner 1 for a vehicle. As such, the same effects made by the dust measuring system 10 for a vehicle and the air conditioner 1 for a vehicle in the first example can be made in the present example as well.

In the above-described examples / embodiments, the dust measuring systems 10, 10A, 10B for a vehicle each has the controller 12 and the display 13. The controller 12 uses the information on the dust concentration detected by the dust measuring sensor 11, 11A or 11B. The display 13 displays the information on the dust concentration. However, the dust measuring systems 10, 10A, 10B for a vehicle each may have only one of the controller 12 or the display 13 or may not have the controller 12 and the display 13.

## Claims

1. A dust measuring system (10A) for a vehicle, comprising a dust measuring sensor (11A) that measures a dust concentration of air in a cabin of the vehicle, and
an air conditioner (1) for the vehicle that controls an air conditioning for the cabin,
the air conditioner (1) has
an aspirator (3) that draws in the air from the cabin by using a pressure drop caused due to a flow of air taken in from an air-conditioning unit (2) and
an air inflow path (6) through which the air drawn in from the cabin by the aspirator (3) flows,
**characterized in that**
the dust measuring sensor (11A) is mounted to the air inflow path (6) to measure the dust concentration from a flow of the air drawn in from the cabin,
the air inflow path (6) has an inside-air sensor (5) that is positioned in an inlet portion adjacent to the cabin and that detects information on the air drawn in from the cabin, and
the dust measuring sensor (11A) is integrally formed with the inside-air sensor (5).

2. The dust measuring system (10A) for a vehicle of claim 1, wherein
the aspirator (3) causes a flow of the air flowing at a specified speed, and
the flow of the air flowing at the specified speed enables the dust measuring sensor (11A) to detect the dust concentration.

3. The dust measuring system (10A) for a vehicle of any one of claims 1 to 2, further comprising
a controller (12) using information on the dust concentration measured by the dust measuring sensor (11A).

4. The dust measuring system (10A) for a vehicle of any one of claims 1 to 3, further comprising
a display (13) displaying information on the dust concentration measured by the dust measuring sensor (11A).

5. The dust measuring system (10A) for a vehicle of any one of claims 1 to 4, wherein
the air-conditioning unit (2) includes a blower unit, and
while an engine of the vehicle is warmed up, the blower unit is operated and causes the flow of the air to enable the dust measuring sensor (11A) to measure the dust concentration.

## Patentansprüche

1. Staubmesssystem (10A) für ein Fahrzeug, mit
einem Staubmesssensor (11A), der eine Staubkonzentration von Luft in einer Kabine des Fahrzeugs misst, und
eine Klimaanlage (1) für das Fahrzeug, die eine Klimatisierung für die Kabine steuert,
wobei die Klimaanlage (1) aufweist
einen Aspirator (3), der die Luft aus der Kabine durch Verwenden eines Druckabfalls, der durch einen von einer Klimaanlageneinheit (2) angesaugten Luftstrom verursacht wird, ansaugt, und
einen Lufteinströmpfad (6), durch den die von dem Aspirator (3) aus der Kabine angesaugte Luft strömt,
**dadurch gekennzeichnet, dass**
der Staubmesssensor (11A) an dem Lufteinströmweg angebracht ist, um die Staubkonzentration aus einem Luftstrom der aus der Kabine angesaugten Luft zu messen,
der Lufteinströmpfad (6) einen Innenluftsensor (5) aufweist, der in einem an die Kabine angrenzenden Einlassabschnitt positioniert ist und der Informationen über die aus der Kabine angesaugte Luft erfasst, und
der Staubmesssensor (11A) einstückig mit dem Innenluftsensor (5) ausgebildet ist.

2. Staubmesssystem (10A) für ein Fahrzeug gemäß Anspruch 1, wobei
der Aspirator (3) einen Luftstrom der mit einer bestimmten Geschwindigkeit strömenden Luft bewirkt, und
der Luftstrom der mit der bestimmten Geschwindigkeit strömenden Luft den Staubmesssensor (11A) ermöglicht, die Staubkonzentration zu erfassen.

3. Staubmesssystem (10A) für ein Fahrzeug gemäß einem der Ansprüche 1 bis 2, weiterhin mit
einer Steuerung (12), die Informationen über die von dem Staubmesssensor (11A) gemessene Staubkonzentration verwendet.

4. Staubmesssystem (10A) für ein Fahrzeug gemäß einem der Ansprüche 1 bis 3, weiterhin mit
einer Anzeige (13), die Informationen über die von dem Staubmesssensor (11A) gemessene Staubkonzentration anzeigt.

5. Staubmesssystem (10A) für ein Fahrzeug gemäß einem der Ansprüche 1 bis 4, wobei
die Klimaanlageneinheit (2) eine Gebläseeinheit umfasst, und
während eine Kraftmaschine des Fahrzeugs aufgewärmt wird, die Gebläseeinheit betrieben wird und den Luftstrom bewirkt, um den Staubmesssensor (11A) zu ermöglichen, die Staubkonzentration zu messen.

## Revendications

1. Système de mesure de poussière (10A) pour un véhicule, comprenant un capteur de mesure de poussière (11A) qui mesure une concentration de poussière de l'air dans une cabine du véhicule, et
un climatiseur (1) pour le véhicule qui contrôle une climatisation pour la cabine,
le climatiseur (1) a :
un aspirateur (3) qui aspire l'air de la cabine en utilisant une chute de pression provoquée par un écoulement d'air prélevé dans une unité de climatisation (2) et
une trajectoire d'entrée d'air (6) à travers laquelle l'air aspiré de la cabine par l'aspirateur (3) s'écoule,
**caractérisé en ce que** :
le capteur de mesure de poussière (11A) est monté sur la trajectoire d'entrée d'air (6) pour mesurer la concentration de poussière dans un écoulement d'air aspiré depuis la cabine,
la trajectoire d'entrée d'air (6) a un capteur d'air intérieur (5) qui est positionné dans une partie d'entrée adjacente à la cabine et qui détecte l'information concernant l'air aspiré depuis la cabine, et
le capteur de mesure de poussière (11A) est formé, de manière solidaire, avec le capteur d'air intérieur (5).

2. Système de mesure de poussière (10A) pour un véhicule selon la revendication 1, dans lequel :
l'aspirateur (3) provoque un écoulement de l'air s'écoulant à une vitesse spécifiée, et
l'écoulement de l'air s'écoulant à la vitesse spécifiée permet au capteur de mesure de poussière (11A) de détecter la concentration de poussière.

3. Système de mesure de poussière (10A) pour un véhicule selon l'une quelconque des revendications 1 à 2, comprenant en outre :
un organe de commande (12) utilisant l'information concernant la concentration de poussière mesurée par le capteur de mesure de poussière (11A).

4. Système de mesure de poussière (10A) pour un véhicule selon l'une quelconque des revendications 1 à 3, comprenant en outre :
un affichage (13) affichant l'information concernant la concentration de poussière mesurée par le capteur de mesure de poussière (11A).

5. Système de mesure de poussière (10A) pour un véhicule selon l'une quelconque des revendications 1 à 4, dans lequel :
l'unité de climatisation (2) comprend une unité de ventilateur, et
alors qu'un moteur du véhicule est chauffé, l'unité de ventilateur est actionnée et provoque l'écoulement de l'air pour permettre au capteur de mesure de poussière (11A) de mesurer la concentration de poussière.
